# EUROPEAN PATENT SPECIFICATION

(11) **EP 3 071 644 B1**
(45) Date of publication and mention of the grant of the patent: **18.07.2018**
(21) Application number: 14812058.7
(22) Date of filing: 19.11.2014
(51) Int. Cl.: C08L 23/08, C08K 3/30, B29K 105/00, B29L 31/30, B29C 47/00

(54) **IMPROVED POLYOLEFIN COMPOSITION FOR VEHICLE NOISE VIBRATION AND HARSHNESS APPLICATIONS**
VERBESSERTE POLYOLEFINZUSAMMENSETZUNG FÜR FAHRZEUGGERÄUSCHVIBRATIONS- UND RAUHEITSANWENDUNGEN
COMPOSITION AMÉLIORÉE DE POLYOLÉFINE POUR DES APPLICATIONS CONCERNANT LES VIBRATIONS ET LA RUDESSE SONORE DES VÉHICULES

(30) Priority: 22.11.2013 US 201361907703 P
(43) Date of publication of application: 28.09.2016
(73) Proprietor: Dow Global Technologies LLC, Midland, MI 48674 (US)
(72) Inventor: SELISKAR, James T., Bay City, MI 48706 (US); OELBERG, James D., Saginaw, MI 48603 (US)
(74) Representative: Beck Greener
(86) International application number: PCT/US2014/066265
(87) International publication number: WO 2015/077269

(56) References cited:
- WO-A1-98/38245
- WO-A1-2012/039733
- GB-A- 2 386 902
- US-A1- 2007 027 234

## Description

### FIELD OF THE INVENTION

This invention relates to polyolefin compositions and composites for vehicle noise, vibration, and harshness (NVH) applications. Said compositions comprise one or more linear ethylene polymer and/or substantially linear polymer, a filler, and a functionalize polyethylene. Specifically, a NVH composition having a good balance of melt strength and elongation such that it is particularly suitable for sheet extrusion and subsequent thermoforming into sound-deadening sheets or carpet backings for use in vehicles.

### BACKGROUND OF THE INVENTION

It has long been known that interposing mass between a sound source and the area to be kept quiet is an effective means for attaining sound deadening. A sheet of lead is thin, flexible, often highly effective, costly, and hazardous. The challenge, then, is to attain dense, thin, flexible sheet which can be interposed between a source of noise and the area to be quieted.

Sheets of thermoplastics or of rubber-like materials have long been used as sound-deadening means. To make the sheets flexible, dense, strong, and inexpensive has posed a challenge to compounders for many years. For some uses, such as automobile carpet underlayment, it is desirable that the sound-deadening sheet is also formable.

Sound-deadening sheets made from composites of filled thermoplastic compositions are well known for use in such automotive applications. The thermoplastic compositions typically comprise one or more polymer, a filler, oil, a plasticizer, and optional additives. A number of patents have been granted for such highly filled thermoplastic compositions as represented by USP 4,191,798; 4,222,924; 4,263,196; 4,379,190; 4,403,007; 4,430,468; 4,434,258; 4,438,228; 6,472,042; and 6,787,593. Different systems of polymers and fillers with and without plasticizers have been proposed. For example, the above-mentioned patents disclose the use of ethylene interpolymers such as ethylene/vinyl ester, ethylene/unsaturated mono- or di-carboxylic acids, esters of unsaturated acids, metallocene catalyzed ethylene-alpha olefin interpolymers, etc. Blends of such ethylene interpolymers with other elastomers and polymers have also been proposed.

Notwithstanding the proposal of many different polymer based compositions for use in sound-deadening composites, ethylene vinyl acetate has been widely used on a commercial basis. For sheet or flat applications, such materials demonstrate adequate modulus while meeting a number of balanced properties such as impact strength, tensile, elongation, flex modulus and specific gravity. However, where the sound-deadening composition or composite is used in certain applications, such as flooring applications, where formability is a key requirement, ethyl vinyl acetate based compositions lack sufficient elasticity to form even minimally complex articles. However, conventional ethylene-alpha olefin based compositions or composites comprising plasticizers with adequate elasticity, lack sufficient melt strength too allow thermoforming. It would be desirable to have a composition or composite having both sufficient melt strength and elasticity such that sound-deadening applications with deep draws can be formed by a conventional thermoforming process.

### SUMMARY OF THE INVENTION

The polyolefin composition of the present invention is such a composition demonstrating good melt strength and elongation capable of deep draws while providing excellent sound-deadening properties. The composition of the present invention is well suited for sheet extrusion and subsequent use in a thermoforming process to make thermoformed articles.

In one embodiment, invention provides a polyolefin composition in the form of an extruded sheet, an extruded multi-layer sheet, or a single or a multi-layer carpet backing, wherein the composition comprises a physical mixture of:
(A) from 97 to 90 parts by weight of a filled polyolefin composition comprising:
   (1) from 5 to 40 weight percent of at least one or more linear ethylene polymer, one or more substantially linear ethylene polymer, or mixtures thereof characterized as having
      (i) a density from 0.85 g/cm³ to 0.92 g/cm³,
      (ii) a molecular weight distribution (M_{w}/Mₙ) of less than 3.5, and
      (iii) a melt index (I₂) of from 0.1 grams/10 minutes to 175 grams/10 minutes,
         and
   (2) from 60 to 95 weight percent of at least one filler,
      wherein weight percent of (1) and (2) is based on the weight of the filled polyolefin
      and
(B) from 3 to 10 parts by weight of at least one functionalized polyethylene having a melt index (I₂) equal to or greater than 500,
wherein the parts by weight of (A) and (B) is based on the total weight of the polyolefin composition, and wherein the composition is made by dry blending pellets of the filled polyolefin composition and pellets of the functionalized polyethylene to produce a physical mixture, and extruding the mixture without prior melt blending.

Another embodiment of the present invention, is the hereinabove disclosed polyolefin composition in the form of a thermoformed article, preferably in the form of thermoformed under hood insulation, outer/inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, or pressure sensitive damper.

In yet another embodiment, the present invention is a process to make a thermoformed article comprising the steps of:
(I) extruding a sheet, extruding a multi-layer sheet, or extruding a single or multi-layer carpet backing comprising a polyethylene composition comprising a physical mixture of:
   (A) from 97 to 90 parts by weight of a filled polyolefin composition comprising
      (1) from 5 to 40 weight percent of at least one linear ethylene polymer and/or substantially linear ethylene polymer having:
         (i) a density from 0.85 g/cm³ to 0.93 g/cm³,
         (ii) a molecular weight distribution (M_{w}/Mₙ) of less than 3.5, and
         (iii) a melt index (I₂) of from 0.1 grams/10 minutes to 175 grams/10 minutes,
            and
      (2) from 60 to 95 weight percent of at least one filler, wherein weight percent of (1) and (2) is based on the weight of the filled polyolefin;
      wherein the composition is made by dry blending pellets of the filled polyolefin composition and pellets of the functionalized polyethylene to produce a physical mixture, and extruding the mixture without prior melt blending
      and
   (B) from 3 to 10 parts by weight of at least one functionalized polyethylene having a melt index (I₂) equal to or greater than 500,
      wherein the parts by weight of (A) and (B) is based on the total weight of the polyolefin composition.
      and
(II) thermoforming said sheet, coextruded sheet, or single or multi-layer carpet backing into a thermoformed article, preferably a thermoformed under hood insulation, outer/inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, or pressure sensitive damper.

In a preferred embodiment of the present invention, the polyethylene composition described in the above mentioned process is not dried prior to extrusion.

### BRIEF DESCRIPTION OF THE DRAWINGS

**FIG. 1** is a photograph of wet Comparative Examples A roping from an extruder die at 25 RPMs.
**FIG. 2** a photograph of dried Comparative Examples A exiting an extruder die at 80 RPMs with no roping.

### DETAILED DESCRIPTION OF THE INVENTION

The polyolefin composition of the present invention comprises a filled polyolefin composition (A) comprising one or more elastomeric component (1) and one or more filler (2) and a functionalized polyethylene (B). Filled polyolefin compositions are know, for example see USP 6,214,924. A preferred elastomeric component for use in the filled polyolefin composition of the present invention is a substantially linear ethylene polymer or a linear ethylene polymer (S/LEP), or mixtures thereof. Both substantially linear ethylene polymers and linear ethylene polymers are known. Substantially linear ethylene polymers and their method of preparation are fully described in USP 5,272,236 and USP 5,278,272. Linear ethylene polymers and their method of preparation are fully disclosed in USP 3,645,992; USP 4,937,299; USP 4,701,432; USP 4,937,301; USP 4,935,397; USP 5,055,438; EP 129,368; EP 260,999; and WO 90/07526.

Suitable S/LEP comprises one or more C₂ to C₂₀ alpha-olefins in polymerized form, having a T_{g} less than 25°C, preferably less than 0°C, most preferably less than -25°C. Examples of the types of polymers from which the present S/LEP are selected include copolymers of alpha-olefins, such as ethylene and propylene, ethylene and 1-butene, ethylene and 1-hexene or ethylene and 1-octene copolymers, and terpolymers of ethylene, propylene and a diene comonomer such as hexadiene or ethylidene norbornene.

As used here, "a linear ethylene polymer" means a homopolymer of ethylene or a copolymer of ethylene and one or more alpha-olefin comonomers having a linear backbone (i.e. no cross linking), no long-chain branching, a narrow molecular weight distribution and, for alpha-olefin copolymers, a narrow composition distribution. Further, as used here, "a substantially linear ethylene polymer" means a homopolymer of ethylene or a copolymer of ethylene and of one or more alpha-olefin comonomers having a linear backbone, a specific and limited amount of long-chain branching, a narrow molecular weight distribution and, for alpha-olefin copolymers, a narrow composition distribution.

Short-chain branches in a linear copolymer arise from the pendent alkyl group resulting upon polymerization of intentionally added C₃ to C₂₀ alpha-olefin comonomers. Narrow composition distribution is also sometimes referred to as homogeneous short-chain branching. Narrow composition distribution and homogeneous short-chain branching refer to the fact that the alpha-olefin comonomer is randomly distributed within a given copolymer of ethylene and an alpha-olefin comonomer and virtually all of the copolymer molecules have the same ethylene to comonomer ratio. The narrowness of the composition distribution is indicated by the value of the Composition Distribution Branch Index (CDBI) or sometimes referred to as Short Chain Branch Distribution Index. CDBI is defined as the weight percent of the polymer molecules having a comonomer content within 50 percent of the median molar comonomer content. The CDBI is readily calculated, for example, by employing temperature rising elution fractionation, as described in Wild, Journal of Polymer Science, Polymer Physics Edition, Volume 20, page 441 (1982), or USP 4,798,081. The CDBI for the substantially linear ethylene copolymers and the linear ethylene copolymers in the present invention is greater than 30 percent, preferably greater than 50 percent, and more preferably greater than 90 percent.

Long-chain branches in substantially linear ethylene polymers are polymer branches other than short chain branches. Typically, long chain branches are formed by insitu generation of an oligomeric alpha-olefin via beta-hydride elimination in a growing polymer chain. The resulting species is a relatively high molecular weight vinyl terminated hydrocarbon which upon polymerization yields a large pendent alkyl group. Long-chain branching may be further defined as hydrocarbon branches to a polymer backbone having a chain length greater than n minus 2 ("n-2") carbons, where n is the number of carbons of the largest alpha-olefin comonomer intentionally added to the reactor. Preferred long-chain branches in homopolymers of ethylene or copolymers of ethylene and one or more C₃ to C₂₀ alpha-olefin comonomers have at least from 20 carbons up to more preferably the number of carbons in the polymer backbone from which the branch is pendant. Long-chain branching may be distinguished using ¹³C nuclear magnetic resonance spectroscopy alone, or with gel permeation chromatography-laser light scattering (GPC-LALS) or a similar analytical technique. Substantially linear ethylene polymers contain at least 0.01 long-chain branches/1000 carbons and preferably 0.05 long-chain branches/1000 carbons. In general, substantially linear ethylene polymers contain less than or equal to 3 long-chain branches/1000 carbons and preferably less than or equal to 1 long-chain branch/1000 carbons.

Preferred substantially linear ethylene polymers are prepared by using metallocene based catalysts capable of readily polymerizing high molecular weight alpha-olefin copolymers under the process conditions. As used here, copolymer means a polymer of two or more intentionally added comonomers, for example, such as might be prepared by polymerizing ethylene with at least one other C₃ to C₂₀ comonomer. Preferred linear ethylene polymers may be prepared in a similar manner using, for instance, metallocene or vanadium based catalyst under conditions that do not permit polymerization of monomers other than those intentionally added to the reactor. Other basic characteristics of substantially linear ethylene polymers or linear ethylene polymers include a low residuals content (i.e. a low concentration therein of the catalyst used to prepare the polymer, unreacted comonomers and low molecular weight oligomers made during the course of the polymerization), and a controlled molecular architecture which provides good processability even though the molecular weight distribution is narrow relative to conventional olefin polymers.

While the substantially linear ethylene polymers or the linear ethylene polymers used in the practice of this invention include substantially linear ethylene homopolymers or linear ethylene homopolymers, preferably the substantially linear ethylene polymers or the linear ethylene polymers comprise between 50 to 95 weight percent ethylene and 5 to 50, and preferably 10 to 25 weight percent of at least one alpha-olefin comonomer. The comonomer content in the substantially linear ethylene polymers or the linear ethylene polymers is generally calculated based on the amount added to the reactor and as can be measured using infrared spectroscopy according to ASTM D 2238, Method B. Typically, the substantially linear ethylene polymers or the linear ethylene polymers are copolymers of ethylene and one or more C₃ to C₂₀ alpha-olefins, preferably copolymers of ethylene and one or more C₃ to C₁₀, alpha-olefin comonomers and more preferably copolymers of ethylene and one or more comonomers selected from the group consisting of propylene, 1-butene, 1-hexene, 4-methyl-1-pentane, and 1-octene. Most preferably the copolymers are ethylene and 1-octene copolymers.

The density of these substantially linear ethylene polymers or linear ethylene polymers is equal to or greater than 0.850 grams per cubic centimeter (g/cm³), preferably equal to or greater than 0.860 g/cm³, and more preferably equal to or greater than 0.873 g/cm³. Generally, the density of these substantially linear ethylene polymers or linear ethylene polymers is less than or equal to 0.93 g/cm³, preferably less than or equal to 0.900 g/cm³, and more preferably equal to or less than 0.885 g/cm³. The melt flow ratio for substantially linear ethylene polymers, measured as I₁₀/I₂, is greater than or equal to 5.63, is preferably from 6.5 to 15, and is more preferably from 7 to 10. I₂ is measured according to ASTM Designation D 1238 using conditions of 190°C and 2.16 kilogram (kg) mass. I₁₀ is measured according to ASTM Designation D 1238 using conditions of 190°C and 10.0 kg mass.

The M_{w}/Mₙ for substantially linear ethylene polymers is the weight average molecular weight (M_{w}) divided by number average molecular weight (Mₙ). M_{w} and Mₙ are measured by gel permeation chromatography (GPC). For substantially linear ethylene polymers, the I₁₀/I₂ ratio indicates the degree of long-chain branching, i.e. the larger the I₁₀/I₂ ratio, the more long-chain branching exists in the polymer. In preferred substantially linear ethylene polymers M_{w}/Mₙ is related to I₁₀/I₂ by the equation: M_{w}/Mₙ ≤ (I₁₀/I₂) - 4.63. Generally, M_{w}/Mₙ for substantially linear ethylene polymers is at least 1.5 and preferably at least 2.0 and is less than or equal to 3.5, more preferably less than or equal to 3.0. In a most preferred embodiment, substantially linear ethylene polymers are also characterized by a single DSC melting peak.

The preferred I₂ melt index for these substantially linear ethylene polymers or linear ethylene polymers is equal to or greater than 0.01 g/10 min, preferably equal to or greater than 0.1 g/10 min., and more preferably equal to or greater than 1 g/10 min. The preferred I₂ melt index for these substantially linear ethylene polymers or linear ethylene polymers is equal to or less than 250 g/10 min, preferably equal to or less than 175 g/10 min., and more preferably equal to or less than 100 g/10 min.

The preferred M_{w} for these substantially linear ethylene polymers or linear ethylene polymers is equal to or less than 180,000, preferably equal to or less than 160,000, more preferably equal to or less than 140,000 and most preferably equal to or less than 120,000. The preferred M_{w} for these substantially linear ethylene polymers or linear ethylene polymers is equal to or greater than 40,000, preferably equal to or greater than 50,000, more preferably equal to or greater than 60,000, even more preferably equal to or greater than 70,000, and most preferably equal to or greater than 80,000.

Generally, the substantially linear ethylene polymer and/or linear ethylene polymer (1) is employed in the filled polyolefin composition (A) in an amount of at least 2 weight percent, preferably at least 5 weight percent, preferably at least 10 weight percent more preferably at least 15 weight percent based on the total weight of the filled polyolefin composition (A). Generally, the substantially linear ethylene polymer and/or linear ethylene polymer (1) is employed in the filled polyolefin composition (A) in an amount of filler up to and including 50 weight percent, preferably up to and including 40 weight percent, preferably up to and including 35 weight percent, and more preferably up to and including 30 weight percent based on the total weight of the filled polyolefin composition (A).

Component (2) in the filled polyolefin composition of the present invention is one or more filler. Suitable fillers are calcium carbonate, barium sulfate, fly ash, talc, clay, mica, wollastonite, hollow glass beads, titaninum oxide, silica, carbon black, glass fiber, potassium titanate, cement dust, feldspar, nepheline, glass, fumed silica, alumina, magnesium oxide, zinc oxide, aluminum silicate, calcium silicate, titanium dioxide, titanates, glass microspheres, or chalk. Of these fillers, barium sulfate, talc, calcium carbonate, silica/glass, alumina and titanium dioxide, and mixtures thereof, are preferred; of these, calcium carbonate and barium sulfate are most preferred. See for example USP 6,472,042; 5,091,461; and 3,424,703 incorporated herein in their entirety and EP 639,613 A1 and EP 391,413, where these materials and their suitability as filler for polymeric resins are generally described. The fillers used in the present invention may or may not be coated, for example with a fatty acid.

Among other properties, the density of the filler(s) selected will influence the filler loading level to obtain optimized sound-deadening performance in the filled thermoplastic polyolefin compositions according to the present invention. Generally, the filler (2) is employed in the filled polyolefin composition (A) in an amount of at least 50 weight percent, preferably at least 60 weight percent, more preferably at least 65 weight percent, even more preferably at least 70 weight percent based on the total weight of the filled polyolefin composition (A). Generally, the filler (2) is employed in the filled polyolefin composition (A) in an amount of up to and including 98 weight percent, preferably up to and including 95 weight percent, more preferably up to and including 90 weight percent, more preferably up to and including 85 weight percent based the total weight of the filled polyolefin composition (A).

The filled polyolefin compositions (A) useful in the present invention may also optionally contain one or more additives that are commonly used in filled thermoplastic polyolefin compositions of this type. For example a slip agent, preferred slip agents are a saturated fatty acid amide or ethylenebis(amide), an unsaturated fatty acid amide or ethylenebis(amide) or combinations thereof. Other optional additives include, but are not limited to: ignition resistant additives, stabilizers, colorants, pigments, antioxidants, antistats, flow enhancers, mold releases, such as stearic acid, metal stearates (e.g., calcium stearate, magnesium stearate), nucleating agents, including clarifying agents, etc. Preferred examples of additives are ignition resistance additives, such as, but not limited to halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Further, compounds which stabilize polymer compositions against degradation caused by, but not limited to heat, light, and oxygen, or a mixture thereof may be used.

If used, such additives may be present in an amount from at least 0.01 weight percent, preferably at least 0.1 weight percent, more preferably at least 0.5 weight percent, more preferably at least 1 weight percent, more preferably at least 2 weight percent and most preferably at least 5 weight percent based on the total weight of the filled polyolefin composition (A). Generally, the additive is present in an amount less than or equal to 25 weight percent, preferably less than or equal to 20 weight percent, more preferably less than or equal to 15 weight percent, more preferably less than or equal to 12 weight percent, and most preferably less than or equal to 10 weight percent based on the total weight of filled polyolefin composition (A).

The filled polyolefin composition (A) will typically be present in the polyolefin composition of the invention in an amount of equal to or less than 99.9 parts by weight, preferably equal to or less than 99 parts by weight, preferably equal to or less than 97 parts by weight, and more preferably equal to or less than 95 parts by weight. The filled polyolefin composition (A) will typically be present in the polyethylene composition of the invention in an amount of equal to or greater than 80 parts by weight, preferably equal to or greater than 85 parts by weight, and most preferably equal to or greater than 90 parts by weight.

Preparation of the filled thermoplastic polyolefin composition (A) of this invention can be accomplished by any suitable mixing means known in the art, including being prepared in a reactor, powder-powder blending, or preferably dry blending the individual components, and subsequently melt mixing (e.g., using a Banbury mixer, an extruder, roll mill, etc.). The melt blended filled thermoplastic polyolefin useful in the present invention may preferably be first comminuted to pellets for physical blending with the functionalized polyethylene (B) before subsequent extrusion into sheet, multi-layer sheet, or carpet backing.

The polyolefin composition of the present invention further comprises at least one functionalized polyethylene (B). The term "functionalized polyethylene" herein means a polyethylene incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene homopolymer or an ethylene/alpha-olefin interpolymer, or it may be copolymerized with ethylene and an optional additional comonomer to form an interpolymer of ethylene, the functional comonomer and optionally other comonomer(s).

Generally, examples of such functionalized polyethylene (B) may include: copolymers of ethylene and ethylenically unsaturated carboxylic acid such as acrylic acid and methacrylic acid; copolymers of ethylene and esters of carboxylic acid such as vinyl acetate; polyethylene grafted with an unsaturated carboxylic acid or a carboxylic acid anhydride, such as maleic anhydride. Specific examples of such functionalized polyethylene may include, ethylene/vinyl acetate copolymer (EVA), ethylene/acrylic acid copolymer (EAA), ethylene/methacrylic acid copolymer (EMAA), salts therefrom(ionomer), various polyethylene grafted with maleic anhydride (MAH) such as MAH-grafted high pressure low density polyethylene, heterogeneously branched linear ethylene/alpha-olefin interpolymers (which have commonly been referred to as linear low density polyethylene and ultralow density polyethylene), homogeneously branched linear ethylene/alpha-olefin interpolymers, substantially linear ethylene/alpha-olefin interpolymers, and HDPE. Means for grafting functional groups onto polyethylene are described for example in USP 4,762,890, 4,927,888, or 4,950,541, the disclosures of each of which is incorporated herein by reference.

Two preferred functionalized polyethylenes (B) preferably used to form the compositions of present invention are ethylene/acrylic acid copolymers and maleic anhydride grafted polyethylene. More preferred functionalized polyethylenes are ethylene/acrylic acid copolymers, maleic anhydride-grafted substantially linear ethylene/alpha-olefin interpolymers, and maleic anhydride-grafted high density polyethylene.

The amount of the functional group present in the functional polyethylene will vary. Typically, the functional group will be present in a graft-type functionalized polyethylene (e.g., the maleic anhydride content in a maleic anhydride-grafted polyethylene) at a level which is preferably at least 0.1 weight percent, more preferably at least 0.5 weight percent. The functional group will typically be present in a graft-type functionalized polyethylene in an amount less than 10 weight percent, more preferably less than 5 weight percent, and most preferably less than 3 weight percent. In contrast, the functional group will typically be present in a copolymer-type functionalized polyethylene (e.g., the acrylic acid content in an ethylene acrylic acid copolymer) will be at least 1.0 weight percent, preferably at least 5 weight percent, and more preferably at least 7 weight percent. The functional group will typically be present in a copolymer-type functionalized polyethylene in an amount less than 40 weight percent, preferably less than 30 weight percent, and more preferably less than 25 weight percent.

The melt index (I₂) of the functionalized polyethylene (B) may be varied, except to the extent to which it unacceptably affects processability of the inventive composition and physical properties of final product. Generally, the functionalized polyethylene has a melt index of equal to or greater than 500 g/10 min. Unless otherwise noted, I₂ is measured according to ASTM Designation D 1238 using conditions of 190°C and 2.16 kilogram (kg) mass.

The functionalized polyethylene (B) will typically be present in the polyolefin composition of the invention in an amount of at least 0.1 parts by weight, preferably at least 1 parts by weight, preferably at least 3 parts by weight, and more preferably at least 5 parts by weight. The functionalized polyethylene (B) will typically be present in the polyethylene composition of the invention in an amount of no more than 20 parts by weight, preferably no more than 15 parts by weight, and most preferably no more than 10 parts by weight.

The filled polyolefin composition (A) and the functionalized polyethylene (B) components of the present invention are preferably in pellet form, but may be powder, beads, or the like. The polyolefin compositions of the invention are made by dry blending the filled polyolefin composition (e.g., pellets) (A) and the functionalized polyethylene (e.g., pellets) (B) to produce a physical mixture of the two components, sometimes referred to as a salt and pepper mixture. A polyolefin composition comprising a filled polyolefin composition and functionalized polyethylene which have been melt mixed, for example by an extruder, Banbury mixer, roll mill, or the like, and isolated as powder, beads, or pellets for further processing, does not fall within the scope of the present invention.

The physical mixture of filled polyolefin composition (A) and functionalized polyethylene (B) as described above is extruded, without prior melt blending, into sheet, coextruded into a multi-layer sheet (sometimes referred to as a composite sheet), or as single or multi-layer carpet backing, all of which may be formed, preferably thermoformed, into a desired automotive application. When the polyolefin composition of the present invention is used as a carpet backing, carpet face fibers may comprise polyamides and/or polyesters, typically nylon, as disclosed in USP 6,241,168 which is incorporated herein by reference.

The process to extrude sheet is well known in the art. Extruded sheet/multi-layer sheet is cut in preparation of the thermoforming process. Sheet dimensions (i.e., length, width, and thickness) and/or weight of the sheet will vary depending on the density of the polyolefin composition as well as the intended application which is specific to the thermoformed article to be made therefrom. Any sheet extrusion process which provides sheet with acceptable dimensions and/or weight is acceptable.

Sheet extrusion for the polyolefin composition of the present invention is preferably performed at a temperature equal to or less than 180°C, more preferably equal to or less than 160°C, more preferably equal to or less than 150°C, and most preferably equal to or less than 140°C. Sheet extrusion is preferably performed at a temperature equal to or greater than 120°C, more preferably equal to or greater than 125°C, and more preferably equal to or greater than 130°C. A preferred target temperature for sheet extrusion of the polyolefin composition of the present invention is 140°C.

Preferably the polyolefin composition of the present invention is not dried prior to extrusion. The physical mixture of the filled thermoplastic polyolefin and the polyethylene allow for satisfactory extrusion, e.g., at high screw rotations per minute (RPMs) without surging/breaking, sometimes referred to as roping, thus reducing manufacturing time through increased output and reducing cost by eliminating a drying step.

Preferably, the cut extruded sheet/multi-layer sheet comprising the polyolefin composition of the present invention is utilized in a thermoforming process to manufacture a thermoformed article. The process to thermoform a sheet into a formed article is well known. A sheet may be shaped into an article by positively thermoforming (sometimes referred to as "male" thermoforming) or negatively thermoforming (sometimes referred to as "female" thermoforming).

Thermoforming sheet comprising the polyolefin composition of the present invention is preferably performed at a temperature equal to or less than 145°C, more preferably equal to or less than 140°C, more preferably equal to or less than 135°C, and most preferably equal to or less than 130°C. Thermoforming sheet comprising the polyolefin composition of the present invention is preferably performed at a temperature equal to or greater than 90°C, more preferably equal to or greater than 95°C, and more preferably equal to or greater than 100°C. A preferred target temperature for thermoforming a sheet comprising the elastomer composition of the present invention is 110°C.

The polyolefin compositions of the present invention are useful as molded, especially thermoformed, in vehicle articles, preferably automotive articles which provide, among other properties, sound-deadening, dampening, insulation, and/or absorbance. For example, under hood insulation, outer/inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, pressure sensitive damper, and the like.

To illustrate the practice of this invention, examples of preferred embodiments are set forth below. However, these examples do not in any manner restrict the scope of this invention.

### EXAMPLES

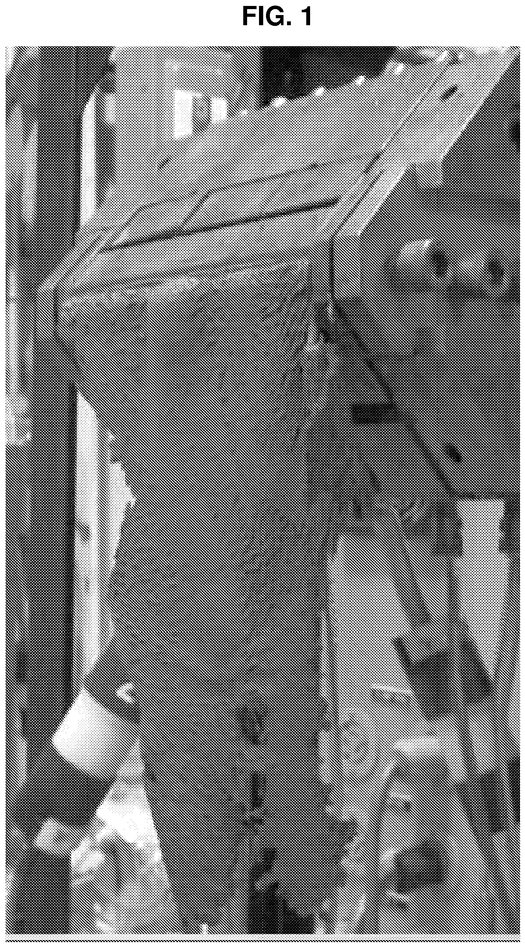

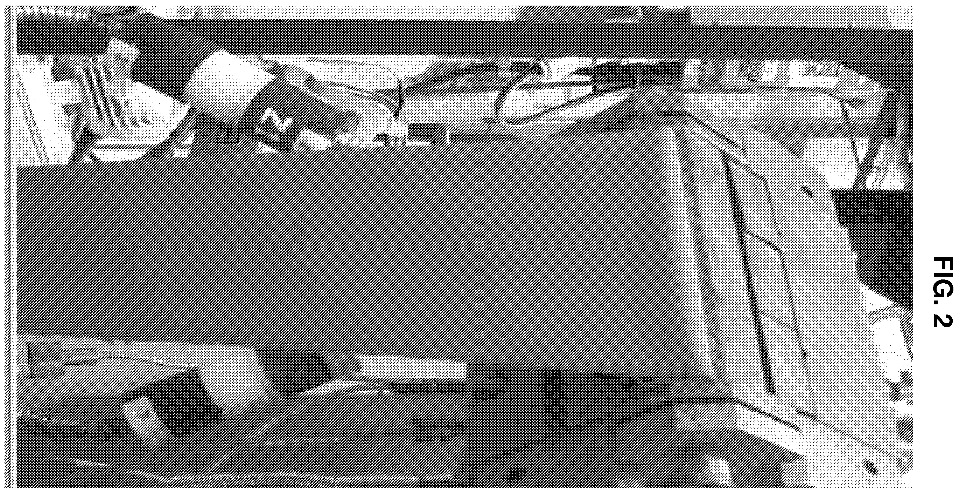

Comparative Example A is a polyolefin composition comprising a filled thermoplastic composition without a functionalized polyethylene. Comparative Example A is compounded on a FCM, passed though a single screw extruder to produce pellets. The pellets are then extruded onto carpet substrate and thermoformed into shape. This resin had a moisture level of 0.9% and when processed on a Killian extruder, the material started to surge, sometimes referred to as roping, at 25 to 40 RPM's. (**FIG. 1**) Drying Comparative Example A at 150°F for 4 hours reduces the moisture level to below 0.02 % and extruded at 80 RPM's without roping. (**FIG. 2**)

Comparative Example B is a polyethylene composition comprising a filled thermoplastic composition and a functionalized polyethylene wherein the filled thermoplastic polyolefin and the functionalized polyethylene are melt compounded together in a HAAKE lab extruder.

Examples 1 to 3 are an example of the invention comprising a filled thermoplastic composition and varying levels of a functionalized polyethylene physically mixed together (salt and pepper mixture).

The compositions for Comparative Examples A and B and Examples 1 to 3 are given in Table 1 below in parts by weight based on the total weight of the composition. In Table 1:
"SLEP-1" is a substantially linear ethylene-octene copolymer having a density of 0.885 g/cm³ and a MFR of 1 g/10 min at 190°C under a load of 2.16 kg available as ENGAGE™ 8003 Polyolefin Elastomer from the Dow Chemical Company;
"SLEP-2" is a substantially linear ethylene-octene copolymer having a density of 0.870 g/cm³ and a MFR of 5 g/10 min at 190°C under a load of 2.16 kg available as ENGAGE 8200 Polyolefin Elastomer from the Dow Chemical Company;
"CaCO₃" is an uncoated calcium carbonate available from Carmeuse Natural Chemicals wherein at least 90 percent of the particles are equal to or less than 5 microns in size;
"MA-g-PE" is a functionalized polyethylene grafted with 1 wt % maleic anhydride having a melt flow greater than 500;
"Oil" is a paraffinic oil available as HYPRENE™ P150BS from Ergon-West Virginia, Inc. having a viscosity at 40°C according to ASTM D 341 of 471 centistokes (cSt) and a specific gravity at 15.6°C of 0.894;
"Stearic acid" is available as Stearic Acid 70% VEG-FGK from ACME Hardesty; and
"Black" color concentrate is available as POLYBLACK™ 46515F from A. Schulman.

Properties for Comparative Examples A and B and Examples 1 to 3 are determined on compression molded samples and extrusion is carried out on a Killion extruder with a 7 inch die. In Table 1:
"Modulus" is apparent bending modulus determined according to ASTM D747;
"Elongation" is tensile elongation determined according to ASTM D638; and
"RPMs" is the screw rotation per minute on the Killion extruder.

As can be seen from the results in Table 1, Comparative Example A without the functionalized polyolefin has low modulus and must be dried to extrude without roping. Comparative Example B with the functionalized polyethylene melt blended with the filled thermoplastic polyolefin shows marginal, but unacceptable, improvement in RPMs before roping, high in modulus, but low elongation. The examples of the invention, Examples 1 to 3, wherein the filled thermoplastic polyolefin and functionalized polyethylene are a physical mixture demonstrate good modulus, good elongation, and good ability to extrude at high RPMs without roping.

**Table 1**

| | Com. Ex. A | Com. Ex. B | Example 1 | Example 2 | Example 3 |
|---|---|---|---|---|---|
| Composition | | | | | |
| SLEP-1 | 7.5 | 7.5 | 7.5 | 7.5 | 7.5 |
| SLEP-2 | 7.5 | 7.5 | 7.5 | 7.5 | 7.5 |
| CaCO₃ | 77.5 | 77.5 | 77.5 | 77.5 | 77.5 |
| MA-g-PE | | 5 | 3.75 | 5 | 7.5 |
| Oil | 6.2 | 6.2 | 6.2 | 6.2 | 6.2 |
| Stearic Acid | 0.8 | 0.8 | 0.8 | 0.8 | 0.8 |
| Black | 0.5 | 0.5 | 0.5 | 0.5 | 0.5 |

| Properties | | | | | |
|---|---|---|---|---|---|
| Modulus, MPa | 60 | 40 | 44 | 42 | 40 |
| Elongation, % | >300 | <10 | >300 | >300 | >300 |

| RPMs w/o Roping | | | | | |
|---|---|---|---|---|---|
| Wet | 25 | 30 | 80 | 100 | >100 |
| Dry | 80 | | | | |

## Claims

1. A polyolefin composition in the form of an extruded sheet, an extruded multi-layer sheet, or a single or a multi-layer carpet backing, wherein the composition comprises a physical mixture of:
(A) from 97 to 90 parts by weight of a filled polyolefin composition comprising
(1) from 5 to 40 weight percent of at least one linear ethylene polymer and/or substantially linear ethylene polymer having:
(i) a density from 0.85 g/cm³ to 0.93 g/cm³,
(ii) a molecular weight distribution (M_{w}/Mₙ) of less than 3.5, and
(iii) a melt index (I₂) of from 0.1 grams/10 minutes to 175 grams/10 minutes,
and
(2) from 60 to 95 weight percent of at least one filler,
wherein weight percent of (1) and (2) is based on the weight of the filled polyolefin (A)
and
(B) from 3 to 10 parts by weight of at least one functionalized polyethylene having a melt index (I₂) equal to or greater than 500,
wherein the parts by weight of (A) and (B) is based on the total weight of the polyolefin composition, and wherein the composition is made by dry blending pellets of the filled polyolefin composition and pellets of the functionalized polyethylene to produce a physical mixture, and extruding the mixture without prior melt blending.

2. A thermoformed article formed from the composition of Claim 1.

3. A thermoformed under hood insulation, outer/inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, or pressure sensitive damper formed from the composition of Claim 1.

4. A process to make a thermoformed article comprising the steps of
(I) extruding a sheet, a coextruded sheet, or a single or a multi-layer carpet backing comprising a polyethylene composition comprising a physical mixture of:
(A) from 97 to 90 parts by weight of a filled polyolefin composition comprising
(1) from 5 to 40 weight percent of at least one linear ethylene polymer and/or substantially linear ethylene polymer having:
(i) a density from 0.85 g/cm³ to 0.92 g/cm³,
(ii) a molecular weight distribution (M_{w}/Mₙ) of less than 3.5, and
(iii) a melt index (I₂) of from 0.1 grams/10 minutes to 175 grams/10 minutes,
and
(2) from 60 weight percent to 95 weight percent of at least one filler, wherein weight percent of (1) and (2) is based on the weight of the filled polyolefin (A)
and
(B) from 3 to 10 parts by weight of at least one functionalized polyethylene having a melt index (I₂) equal to or greater than 500,
wherein the parts by weight of (A) and (B) is based on the total weight of the polyolefin composition
wherein the composition is made by dry blending pellets of the filled polyolefin composition and pellets of the functionalized polyethylene to produce a physical mixture, and extruding the mixture without prior melt blending
and
(II) thermoforming said sheet, coextruded sheet, or a single or multi-layer carpet backing into a thermoformed article.

5. The process of Claim 4 wherein the polyethylene composition is not dried prior to extrusion.

6. The process of Claim 4 wherein the thermoformed article is under hood insulation, outer/inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, or pressure sensitive damper.

## Patentansprüche

1. Eine Polyolefinzusammensetzung in der Form eines extrudierten Flächengebildes, eines extrudierten mehrschichtigen Flächengebildes oder einer einzel- oder mehrschichtigen Teppichbeschichtung, wobei die Zusammensetzung eine physikalische Mischung von Folgendem beinhaltet:
(A) zu 97 bis 90 Gewichtsteilen einer gefüllten Polyolefinzusammensetzung, beinhaltend:
(1) zu 5 bis 40 Gewichtsprozent mindestens ein lineares Ethylenpolymer und/oder im Wesentlichen lineares Ethylenpolymer mit:
(i) einer Dichte von 0,85 g/cm³ bis 0,93 g/cm³,
(ii) einer Molekulargewichtsverteilung (M_{w}/Mₙ) von weniger als 3,5 und
(iii) einem Schmelzindex (I₂) von 0,1 Gramm/10 Minuten bis 175 Gramm/10 Minuten
und
(2) zu 60 bis 95 Gewichtsprozent mindestens einen Füllstoff,
wobei die Gewichtsprozente von (1) und (2) auf das Gewicht des gefüllten Polyolefins (A) bezogen sind
und
(B) zu 3 bis 10 Gewichtsteilen von mindestens einem funktionalisierten Polyethylen mit einem Schmelzindex (I₂) gleich oder größer als 500,
wobei die Gewichtsteile von (A) und (B) auf das Gesamtgewicht der Polyolefinzusammensetzung bezogen sind, und wobei die Zusammensetzung durch Trockenvermischen von Pellets der gefüllten Polyolefinzusammensetzung und Pellets des funktionalisierten Polyethylens, um eine physikalische Mischung zu produzieren, und Extrudieren der Mischung ohne vorheriges Schmelzvermischen hergestellt wird.

2. Ein aus der Zusammensetzung gemäß Anspruch 1 gebildeter warmgeformter Artikel.

3. Eine Unterhaubenisolierung, äußere/innere Armaturisolierung, obere/seitliche Motorverkleidung, Wurfmattenunterlage, Teppichunterlage, ein Bodendämpfer, eine Türisolierung, Kopfteilisolierung, eine/ein Rücksitzunterseite/-schmutzfänger, eine Hinterbereich-/Säulenverkleidung, Hutablage, ein hinteres Radkasten, eine Kofferraumverkleidung, ein Kofferraumboden oder druckempfindlicher Dämpfer, warmgeformt und gebildet aus der Zusammensetzung gemäß Anspruch 1.

4. Ein Verfahren zum Herstellen eines warmgeformten Artikels, beinhaltend die Schritte des
(I) Extrudierens eines Flächengebildes, eines coextrudierten Flächengebildes oder einer einzel- oder mehrschichtigen Teppichbeschichtung, beinhaltend eine Polyethylenzusammensetzung, beinhaltend eine physikalische Mischung von Folgendem:
(A) zu 97 bis 90 Gewichtsteilen einer gefüllten Polyolefinzusammensetzung, beinhaltend
(1) zu 5 bis 40 Gewichtsprozent mindestens ein lineares Ethylenpolymer und/oder im Wesentlichen lineares Ethylenpolymer mit:
(i) einer Dichte von 0,85 g/cm³ bis 0,92 g/cm³,
(ii) einer Molekulargewichtsverteilung (M_{w}/Mₙ) von weniger als 3,5 und
(iii) einem Schmelzindex (I₂) von 0,1 Gramm/10 Minuten bis 175 Gramm/10 Minuten
und
(2) zu 60 Gewichtsprozent bis 95 Gewichtsprozent mindestens einen Füllstoff,
wobei Gewichtsprozent von (1) und (2) auf das Gewicht des gefüllten Polyolefins (A) bezogen ist,
und
(B) zu 3 bis 10 Gewichtsteilen von mindestens einem funktionalisierten Polyethylen mit einem Schmelzindex (I₂) gleich oder größer als 500,
wobei die Gewichtsteile von (A) und (B) auf das Gesamtgewicht der Polyolefinzusammensetzung bezogen sind,
wobei die Zusammensetzung durch Trockenvermischen von Pellets der gefüllten Polyolefinzusammensetzung und Pellets des funktionalisierten Polyethylens, um eine physikalische Mischung zu produzieren, und Extrudieren der Mischung ohne vorheriges Schmelzvermischen hergestellt wird,
und
(II) Warmformen des Flächengebildes, coextrudierten Flächengebildes oder einer einzel- oder mehrschichtigen Teppichbeschichtung in einen warmgeformten Artikel.

5. Verfahren gemäß Anspruch 4, wobei die Polyethylenzusammensetzung vor der Extrusion nicht getrocknet wird.

6. Verfahren gemäß Anspruch 4, wobei der warmgeformte Artikel eine Unterhaubenisolierung, äußere/innere Armaturisolierung, obere/seitliche Motorverkleidung, Wurfmattenunterlage, Teppichunterlage, ein Bodendämpfer, eine Türisolierung, Kopfteilisolierung, eine/ein Rücksitzunterseite/-schmutzfänger, eine Hinterbereich-/Säulenverkleidung, Hutablage, ein hinteres Radkasten, eine Kofferraumverkleidung, ein Kofferraumboden oder ein druckempfindlicher Dämpfer ist.

## Revendications

1. Une composition de polyoléfine sous la forme d'une feuille extrudée, d'une feuille multicouche extrudée, ou d'une sous-couche de moquette monocouche ou multicouche, la composition comprenant un mélange physique :
(A) de 97 à 90 parties en poids d'une composition de polyoléfine comprenant des charges comprenant
(1) de 5 à 40 pour cent en poids d'au moins un polymère d'éthylène linéaire et/ou polymère d'éthylène substantiellement linéaire ayant :
(i) une masse volumique allant de 0,85 g/cm³ à 0,93 g/cm³,
(ii) une distribution des masses moléculaires (M_{w}/Mₙ) de moins de 3,5, et
(iii) un indice de fluidité à l'état fondu (I₂) allant de
0,1 gramme/10 minutes à 175 grammes/10 minutes,
et
(2) de 60 à 95 pour cent en poids d'au moins une charge,
dans laquelle le pourcentage en poids de (1) et (2) est rapporté au poids de la polyoléfine comprenant des charges (A)
et
(B) de 3 à 10 parties en poids d'au moins un polyéthylène fonctionnalisé ayant un indice de fluidité à l'état fondu (I₂) égal ou supérieur à 500,
dans laquelle les parties en poids de (A) et (B) sont rapportées au poids total de la composition de polyoléfine, et la composition étant réalisée par mélange homogène à l'état sec de granules de la composition de polyoléfine comprenant des charges et de granules du polyéthylène fonctionnalisé afin de produire un mélange physique, et extrusion du mélange sans mélange homogène à l'état fondu préalable.

2. Un article thermoformé formé à partir de la composition de la revendication 1.

3. Un isolant de capot, un isolant de table externe/interne, un isolant de tablier supérieur/latéral, une thibaude de tapis, une thibaude de moquette, un amortisseur de plancher, un isolant de porte, un isolant de plafond, un fond/tenseur de siège arrière, une garniture de custode/montant arrière, une plage arrière, un logement de roue arrière, une garniture de coffre, un plancher de coffre, ou un amortisseur sensible à la pression thermoformé(e) formé(e) à partir de la composition de la revendication 1.

4. Un procédé afin de réaliser un article thermoformé comprenant les étapes consistant à
(I) extruder une feuille, une feuille coextrudée, ou une sous-couche de moquette monocouche ou multicouche comprenant une composition de polyéthylène comprenant un mélange physique :
(A) de 97 à 90 parties en poids d'une composition de polyoléfine comprenant des charges comprenant
(1) de 5 à 40 pour cent en poids d'au moins un polymère d'éthylène linéaire et/ou polymère d'éthylène substantiellement linéaire ayant :
(i) une masse volumique allant de 0,85 g/cm³ à 0,92 g/cm³,
(ii) une distribution des masses moléculaires (M_{w}/Mₙ) de moins de 3,5, et
(iii) un indice de fluidité à l'état fondu (I₂) allant de
0,1 gramme/10 minutes à 175 grammes/10 minutes,
et
(2) de 60 pour cent en poids à 95 pour cent en poids d'au moins une charge,
dans lequel le pourcentage en poids de (1) et (2) est rapporté au poids de la polyoléfine comprenant des charges (A)
et
(B) de 3 à 10 parties en poids d'au moins un polyéthylène fonctionnalisé ayant un indice de fluidité à l'état fondu (I₂) égal ou supérieur à 500,
dans lequel les parties en poids de (A) et (B) sont rapportées au poids total de la composition de polyoléfine
dans lequel la composition est réalisée par mélange homogène à l'état sec de granules de la composition de polyoléfine comprenant des charges et de granules du polyéthylène fonctionnalisé afin de produire un mélange physique, et extrusion du mélange sans mélange homogène à l'état fondu préalable
et
(II) thermoformer ladite feuille, feuille coextrudée, ou sous-couche de moquette monocouche ou multicouche en un article thermoformé.

5. Le procédé de la revendication 4 dans lequel la composition de polyéthylène n'est pas séchée préalablement à l'extrusion.

6. Le procédé de la revendication 4 dans lequel l'article thermoformé est un isolant de capot, un isolant de table externe/interne, un isolant de tablier supérieur/latéral, une thibaude de tapis, une thibaude de moquette, un amortisseur de plancher, un isolant de porte, un isolant de plafond, un fond/tenseur de siège arrière, une garniture de custode/montant arrière, une plage arrière, un logement de roue arrière, une garniture de coffre, un plancher de coffre, ou un amortisseur sensible à la pression.
